# NEW EUROPEAN PATENT SPECIFICATION

(11) **EP 0 515 702 B2**
(45) Date of publication and mention of the opposition decision: **02.03.2005**
(45) Mention of the grant of the patent: 08.07.1998
(21) Application number: 89112137.8
(22) Date of filing: 14.02.1985
(51) Int. Cl.: B29C 49/16

(54) **Method of blow-moulding a biaxially oriented polyethylene terephthalate resin bottle-shaped container**
Verfahren zum Blasformen eines biaxial orientierten flaschenförmigen Behälters aus Polyäthylenterephthalat
Procédé pour mouler par soufflage un récipient orienté d'une manière biaxiale en forme de bouteille, en polyéthylène térephthalate

(30) Priority: 15.02.1984 JP 2680284
(43) Date of publication of application: 02.12.1992
(73) Proprietor: Yoshino Kogyosho Co., Ltd., Tokyo 136-8531 (JP)
(72) Inventor: Sugiura, Hiroaki, Tokyo (JP); Tanaka, Fuminori, Magsudo-Shi Chiba-Ken (JP); Uesugi, Daisuke, Tokyo (JP)
(74) Representative: Hermann, Gerhard, Dr.

(56) References cited:
- DE-C- 2 911 148
- GB-A- 2 108 899
- GB-A- 2 117 697
- JP-A- 5 753 326
- JP-A- 56 105 935
- JP-A- 58 173 628
- US-A- 4 070 428
- US-A- 4 233 022
- US-A- 4 385 089

## Description

The present invention relates to a method of blow-moulding a biaxially-oriented polyethylene terephthalate resin bottle-shaped container.

Polyethylene terephthalate resin (hereinafter referred to as "PET") has stable physical properties, no public pollution, excellent transparency and high mechanical strength. Also, PET causes no pollution when incinerated. PET is widely used in the production of biaxially-oriented blow-moulded bottle-shaped containers, and is particularly useful for bottling foodstuffs.

PET bottle-shaped containers have a number of excellent properties as described above; however, blow-moulded bottle-shaped containers of biaxially-oriented PET which are not heat treated suffer remarkable deformation at temperatures of 70°C or more. Therefore, such PET bottle-shaped containers cannot be used to bottle retort food, which is heat-treated by allowing the food to stand for 30 minutes at 120°C, or other heat-treated food. Accordingly, there is great demand for PET bottle-shaped containers which have high heat resistance.

There are several conventional methods of imparting heat resistance to PET bottle-shaped containers such as (1) heating a blowing mould during blow-moulding of a PET bottle-shaped container to a temperature higher than the target heat resistance temperature value to increase the density of the PET bottle-shaped container; (2) heat-setting a PET bottle-shaped container after blow-moulding to remove residual strain produced by blow-moulding; and (3) blow-moulding an intermediate mould parison or piece by first moulding a primary blow-moulded container, then reheating it at approximately 110°C, and finally blowing it again to produce a bottle-shaped container.

In method (1), the mouldability of the PET decreases as the mould temperature rises. According to this method, the PET is heat resistant up to a maximum of approximately 100°C. This PET cannot be used for bottle-shaped containers containing food which is heat-treated at temperatures much higher than 100°C. The methods (2) and (3) of imparting heat resistance to the PET bottle-shaped container cannot expect the heat resistance higher than the method (1).

GB-A-2 117 697 (Owens-Illinois Inc.), upon which the independent method claim 1 is based, discloses a method of making a high density, partially crystalline, biaxially oriented, heat set, hollow poly(ethylene terephthalate) plastic article comprising
(1) enclosing a tubular parison of said poly(ethylene terephthalate), haying a closed end and an open end destined to form the neck or finish of the hollow article, within a blow mould, which parison is at a first temperature range, which first temperature range is conducive to orientation during stretching,
(2) while the parison is still at the first temperature range, expanding the parison into contact and conformance with the blow mould walls by inflation with a gas under pressure to make a hollow blown article, the said stretching and expanding under the resulting strain conditions resulting in biaxial orientation and concomitant partial crystallization, and then while the article walls are still inflated in contact with the mould walls, raising the temperature of the article to a higher second temperature in the range of 200 to 250°C, except for the neck or finish portion of the article which is kept at a low temperature such that crystallization is minimised or eliminated so that the neck or finish portion remains transparent,
(3) wherein the heating in the second temperature range heat sets the body of the article by causing further crystallization thereof as indicated by density increase,
(4) and while the hollow article is still at a shrink-age-resisting pressure exceeding atmospheric, cooling the article to a temperature at which it maintains its shape when not pressurised, but not below 100°C, and
(5) thereafter reducing the gas pressure within the article to essentially ambient pressure.

It is the object of the invention to provide a method of blow-moulding a biaxially-oriented PET bottle-shaped container having very high heat resistance.

The object is solved, according to the present invention, by the method recited in claim 1.

A better understanding of the present invention will become more fully apparent from the following illustrative description when read in conjunction with the accompanying drawings, in which :
Figure 1 is a longitudinal sectional view depicting the primary blow-moulding state of a primary intermediate moulded parison or piece according to the present invention;
Figure 2 is a longitudinal sectional view showing the secondary blow-moulding state of a secondary intermediate moulded piece according to the present invention; and
Figure 3 is a graphic diagram showing the relationship between the density and the blow-moulding temperature of the blow-moulded bottle-shaped container of the present invention.

An embodiment of the present invention will now be described in detail with reference to the accompanying drawings.

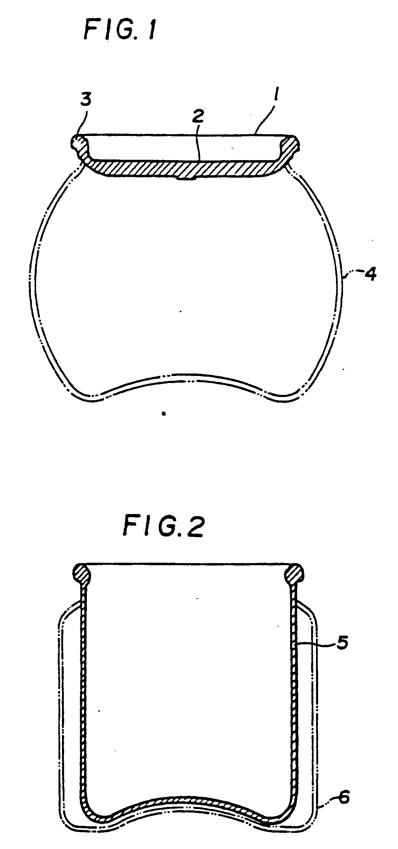

With reference to Figure 1, a method for blow-moulding a biaxially-oriented PET bottle-shaped container according to the present invention comprises the steps of: heating the body portion 2 of a preform 1, which is formed in a desired shape in advance, at 100 to 120°C until the temperature approaches but does not reach the thermal crystallization temperature of the PET, biaxial-orientation blow-moulding the preform in a primary blowing mould heated at 110 to 230°C to form a primary intermediate moulded bottle-shaped piece 4, heating the primary intermediate moulded bottle-shaped piece 4 at a temperature which is 20°C or higher than the primary blow mould temperature to form a secondary intermediate moulded bottle-shaped piece, and blow-moulding the secondary intermediate moulded bottle-shaped piece 5 in a secondary blowing mould heated at 100 to 150°C, which is higher than the sterilizing temperature of the content filled in the moulded bottle-shaped container, to form a final bottle-shaped container 6.

More particularly, the method of blow-moulding a biaxially-oriented PET bottle-shaped container according to the present invention includes the first step of injection moulding in advance a preform 1 in a desired shape, the second step of thermally crystallizing, without orienting deformation, a neck portion of the bottle-shaped container 6 of the shape which remains in the shape at the injection moulding time, and the third step of blow-moulding the body of the bottle-shaped container 6.

The preform 1 is injection-moulded by ordinary injection moulding techniques. In the exemplified embodiment, the injection-moulded preform 1 is formed in dish shape as shown by solid lines in Figure 1. The preform 1 has a neck portion 3 and a body portion 2. The body portion 2 becomes the body, including a bottom, of the biaxially-oriented blow-moulded bottle-shaped container 6.

The preform 1 is orientation area magnified 5 to 13 times. The orienting density becomes 1.36 or more. The body is thus not thermally crystallized even at the mould temperature of 110 to 230°C of the primary blowing mould at the blow-moulding time.

Thus, the body 2 is formed in the primary intermediate moulded piece 4 without thermal crystallization even at the mould temperature of 110 to 230°C (which is higher than the crystallizing temperature) of the primary blowing mould.

The peripheral end of a connecting portion between the body portion 2 and the neck portion 3 and the central portion of the body portion are hardly oriented as compared with other parts of the body portion 2 and are also readily crystallized. These portions are therefore preferably reduced in thickness relatively to the other parts of the body portion 2 so as to be readily oriented.

The neck portion 3 of the preform 1 is, preferably, thermally crystallized or whitened prior to biaxial-orientation blow moulding the preform to form the primary intermediate moulded bottle-shaped piece 4. The whitening of the neck portion 3 may be performed by sufficiently heating the neck portion 3 to crystallize the PET, followed by gradual cooling. It should be noted, however, that all deformation of the neck portion 3 should be avoided when whitening the neck portion 3. Particularly, deterioration of the degree of the circularity of the neck portion 3 should be avoided since such deformation would largely reduce the function of the final blow-moulded bottle-shaped container 6.

After the neck portion 3 of the preform 1 is whitened in this manner, the preform 1 is blow-moulded to form the bottle-shaped container 6. The blow-moulding step involves biaxial-orientation blow-moulding the preform 1 to form a primary intermediate moulded bottle-shaped piece 4, heating the primary intermediate moulded bottle-shaped piece 4 to thermally contract it and form a secondary intermediate moulded bottle-shaped piece 5, and blow-moulding the secondary intermediate moulded bottle-shaped piece 5 to form a final bottle-shaped container 6.

The step of biaxial-orientation blow-moulding the preform 1 to form the primary intermediate moulded bottle-shaped piece 4 is performed by first heating the body portion 2 of the preform 1 at 100 to 120°C until the temperature approaches but does not reach the thermal crystallization temperature of the PET.

Next, the preform 1 is blow-moulded in a blow mould heated at 110 to 230°C to form the primary intermediate bottle-shaped piece 4. The primary intermediate moulded bottle-shaped piece 4 is oriented in a range that the area magnification of the preform 1 to the primary intermediate moulded bottle-shaped piece 4 is 5 to 13 times so that the orienting density of the resin becomes 1.36 or more so as to prevent the bottle-shaped piece 4 from thermally crystallizing by the heating temperature of the primary mould and the heating temperature of the secondary intermediate moulded piece.

The primary intermediate moulded bottle-shaped piece 4 is then heated to thermally contract it to form the secondary intermediate moulded bottle-shaped piece 5. This contracting step is performed to prevent thermal deformation by eliminating residual stress developed in the blow-moulded piece 4 from biaxial-orientation blow-moulding. The orientation blow-moulded portion of the primary intermediate moulded bottle-shaped piece 4 is deformed by the internal residual stress by heating the primary intermediate moulded bottle-shaped piece 4 at a temperature which is at least 20°C higher than the primary blowing mould temperature, thereby to eliminate the residual stress. The deformation produced by the elimination of the internal residual stress acts to contract the orientation-moulded portion of the primary intermediate moulded bottle-shaped piece 4. Consequently, the orientation-moulded portion of the secondary intermediate moulded bottle-shaped piece 5 is moulded by this contraction deformation.

The body portion of the secondary intermediate moulded bottle-shaped piece 5 formed by the contraction deformation is predetermined in the orienting magnification from the preform 1 to the primary intermediate moulded piece 4 and the size of the primary intermediate moulded piece 4 to be substantially equal to or slightly smaller than the orientation-moulded body portion of the final bottle-shaped container 6 as shown in Figure 2.

Finally, the secondary intermediate moulded bottle-shaped piece 5 is blow-moulded to form the final bottle-shaped container 6. The secondary intermediate moulded bottle-shaped piece 5, thermally contracted by heating at a temperature which is 20°C or higher than the primary blow mould temperature as described above, is placed in the secondary blowing mould which is heated at a temperature of 100 to 150°C. The temperature of the secondary blowing mould is several degrees greater than the maximum temperature the moulded bottle-shaped container 6 will be subjected to during use.

The body shape of the blow-moulded portion of the secondary intermediate moulded bottle-shaped piece 5 is substantially equal to or slightly smaller than the corresponding body shape of the bottle-shaped container 6 as described above. Accordingly, the orientation magnification from the secondary intermediate moulded bottle-shaped piece 5 to the final bottle-shaped container 6 is quite small, and consequently a stress to be created when the bottle-shaped container 6 moulded from the secondary intermediate moulded bottle-shaped piece 5 is orientation moulded, is almost not generated.

Further, since the bottle-shaped container 6 is blow-moulded by a secondary blowing mould heated at a temperature greater than the temperature the bottle-shaped container will be subjected to during use, the bottle-shaped container 6 is heatset by the secondary blowing mould, and therefore the bottle-shaped container 6 has no residual stress as well as high heat resistance.

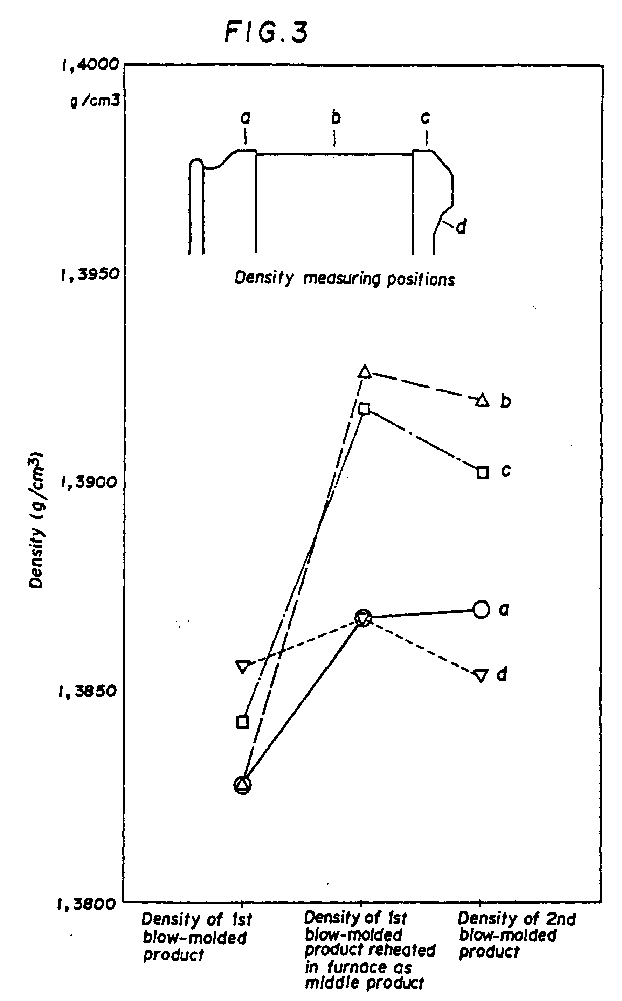

Figure 3 shows the relationship between the density of the moulding material at the respective moulding steps and the mould temperature.

A specific example of the method of blow-moulding a biaxially-oriented PET bottle-shaped container according to the present invention will now be described.

A preform 1 was biaxial-orientation blow-moulded to form a primary intermediate moulded bottle-shaped piece 4. The preform was heated to a temperature of 115°C and was blow-moulded at a primary blowing mould temperature of 180°C under a blowing pressure of 25 kg/cm2 for a blowing time of 1.4 sec. The primary intermediate moulded bottle-shaped piece 4 was then headed and thermally contracted to form a secondary intermediate moulded bottle-shaped piece 5 at a heating temperature of 225°C. The secondary intermediate moulded bottle-shaped piece 5 was blow-moulded at a secondary blowing mould temperature of 140°C under a blowing pressure of 30 kg/cm² for a blowing time of 4.4 sec. to form the final blow-moulded bottle-shaped container 6.

The heat resistance of the blow-moulded bottle-shaped container 6 was then tested by immersing in the state without a cap for 30 minutes in a tank of glycerin heated at 120°C. The bottle-shaped container 6 was then removed from the glycerin and water-cooled. The volumetric variation of the container before heating and after heating was measured. The volumetric rate of change of the bottle-shaped container 6 was found to be 0.33%. From this result, it is apparent that a PET bottle-shaped container having sufficiently high heat resistance can be provided by the present invention.

According to the present invention as described above, the method of blow-moulding a PET bottle-shaped container provides a blow-moulded bottle-shaped container having no residual stress and having extremely high heat resistance. The heat resistance temperature value is remarkably increased when compared with that of a conventional container.

## Claims

1. A method of blow-moulding a biaxially-oriented polyethylene terephthalate resin bottle-shaped container comprising
biaxial-orientation blow-moulding a preform at a primary blow mould temperature to form a primary intermediate moulded bottle-shaped piece; and
forming a bottle-shaped container from the primary intermediate moulded bottle-shaped piece;
**characterized in that**
the primary intermediate moulded bottle-shaped piece is heated to be forcibly thermally contracted by heating said primary intermediate bottle-shaped piece to a temperature at least 20°C higher than the primary blow mould temperature to form a secondary intermediate moulded bottle-shaped piece; and
the secondary intermediate moulded bottle-shaped piece is blow moulded to form the bottle-shaped container.

2. The method according to any of the preceding claims, wherein the secondary intermediate moulded bottle-shaped piece is blow moulded in a secondary mould while heated to a temperature greater than the maximum temperature the bottle-shaped container will be subjected to during use.

3. The method according to any of the preceding claims, wherein the preform is oriented until the density of said preform reaches at least 1.36.

4. The method according to any of the preceding claims, wherein, prior to blow moulding, the preform is heated at a temperature that approaches but does not reach the thermal crystallization temperature of the polyethylene terephthalate resin.

5. The method according to any of the preceding claims, wherein the step of biaxial-orientation blow moulding a preform includes blow moulding the preform in a primary blowing mould heated at 110°C to 230°C to form the primary intermediate moulded bottle-shaped piece.

6. The method according to any of the preceding claims, wherein the preform is orientation area magnified 5 to 13 times to form the primary intermediate moulded bottle-shaped piece.

7. The method according to any of the preceding claims, wherein a magnification between the secondary intermediate moulded bottle-shaped piece and the bottle-shaped container is small.

8. The method according to any of the preceding claims, wherein a neck portion of the preform is thermally crystallized before forming the bottle-shaped container.

9. The method according to any of the preceding claims, wherein the blow-moulding of the secondary intermediate moulded bottle-shaped piece is performed in a secondary blow mould heated at a temperature of 100°C to 150°C.

10. The method according to any of the preceding claims, wherein the orientation-moulded portion of the secondary intermediate moulded bottle-shaped piece is substantially the same size as or smaller than the orientation-moulded portion of the bottle-shaped container.

11. The method according to any of the preceding claims, wherein said biaxial-orientation blow moulding creates internal residual stress, and said primary intermediate moulded bottle-shaped piece is deformed by the internal residual stress to substantially eliminate the internal residual stress.

12. The method according to any of the preceding claims, wherein a magnification from the secondary intermediate moulded bottle-shaped piece to the bottle-shaped container is small compared to a magnification from the preform to the primary intermediate moulded bottle-shaped piece.

## Patentansprüche

1. Verfahren zum Blasformen eines biaxial orientierten flaschenförmigen Behälters aus Polyethylenterephthalatharz, umfassend:
Biaxial-Orientierungsblasformen eines Vorformlings bei einer Primärblasformtemperatur, um ein primäres geformtes flaschenförmiges Zwischenstück auszubilden; und
Ausbilden eines flaschenförmigen Behälters aus dem primären geformten flaschenförmigen Zwischenstück;
**dadurch gekennzeichnet, daß**
das primäre geformte flaschenförmige Zwischenstück durch Erhitzen des primären flaschenförmigen Zwischenstücks auf eine Temperatur, die mindestens 20°C höher ist als die Primärblasformtemperatur, thermisch kontrahiert wird, um ein sekundäres geformtes flaschenförmiges Zwischenstück auszubilden; und
das sekundäre geformte flaschenförmige Zwischenstück blasgeformt wird, um den flaschenförmigen Behälter auszubilden.

2. Verfahren nach einem der vorhergehenden Ansprüche, wobei das sekundäre geformte flaschenförmige Zwischenstück in einer Sekundärform blasgeformt wird, während dieses auf eine Temperatur erhitzt wird, die höher als die maximale Temperatur ist, der der flaschenförmige Behälter während eines Gebrauchs unterworfen werden wird.

3. Verfahren nach einem der vorhergehenden Ansprüche, wobei der Vorformling ausgerichtet wird, bis die Dichte des Vorformlings wenigstens 1,36 erreicht.

4. Verfahren nach einem der vorhergehenden Ansprüche, wobei der Vorformling, vor dem Blasformen, bei einer Temperatur erhitzt wird, die sich der thermischen Kristallisationstemperatur des Polyethylenterephthalatharzes nähert, diese aber nicht erreicht.

5. Verfahren nach einem der vorhergehenden Ansprüche, wobei der Schritt des Biaxial-Orientierungsblasformens eines Vorformlings ein Blasformen des Vorformlings in einer Primärblasform umfaßt, die auf 110°C bis 230°C erhitzt ist, um das primäre geformte flaschenförmige Zwischenstück auszubilden.

6. Verfahren nach einem der vorhergehenden Ansprüche, wobei der Vorformling durch Orientierung vergrößert wird, so dass die Fläche 5 bis 13 mal vergrößert ist, um das primäre geformte flaschenförmige Zwischenstück auszubilden.

7. Verfahren nach einem der vorhergehenden Ansprüche, wobei eine Vergrößerung zwischen dem sekundären geformten flaschenförmigen Zwischenstück und dem flaschenförmigen Behälter gering ist.

8. Verfahren nach einem der vorhergehenden Ansprüche, wobei ein Halsabschnitt des Vorformlings thermisch kristallisiert wird, bevor der flaschenförmige Behälter ausgebildet wird.

9. Verfahren nach einem der vorhergehenden Ansprüche, wobei das Blasformen des sekundären geformten flaschenförmigen Zwischenstücks in einer Sekundärblasform durchgeführt wird, die auf eine Temperatur von 100°C bis 150°C erhitzt ist.

10. Verfahren nach einem der vorhergehenden Ansprüche, wobei der orientierungsgeformte Abschnitt des sekundären geformten flaschenförmigen Zwischenstücks im wesentlichen gleich groß oder kleiner als der orientierungsgeformte Abschnitt des flaschenförmigen Behälters ist.

11. Verfahren nach einem der vorhergehenden Ansprüche, wobei das Biaxial-Orientierungsblasformen innere Restspannung erzeugt, und das primäre geformte flaschenförmige Zwischenstück durch die innere Restspannung verformt wird, um die innere Restspannung im wesentlichen zu beseitigen.

12. Verfahren nach einem der vorhergehenden Ansprüche, wobei eine Vergrößerung von dem sekundären geformten flaschenförmigen Zwischenstück zu dem flaschenförmigen Behälter im Vergleich zu einer Vergrößerung von dem Vorformling zu dem primären geformten flaschenförmigen Zwischenstück gering ist.

## Revendications

1. Procédé de moulage par soufflage d'un récipient en forme de bouteille de résine de polyéthylène-téréphtalate orienté biaxialement comprenant
le fait de mouler par soufflage avec orientation biaxiale une ébauche à une température d'un moule de soufflage primaire pour former une pièce en forme de bouteille moulée intermédiaire primaire ; et
le fait de former un récipient en forme de bouteille à partir de la pièce en forme de bouteille moulée intermédiaire primaire ;
**caractérisé en ce que**
la pièce en forme de bouteille moulée intermédiaire primaire est contractée thermiquement en chauffant cette pièce en forme de bouteille intermédiaire primaire à une température supérieure d'au moins 20°C à la température du moule de soufflage primaire pour former une pièce en forme de bouteille moulée intermédiaire secondaire, et
la pièce en forme de bouteille moulée intermédiaire secondaire est moulée par soufflage pour former le récipient en forme de bouteille.

2. Procédé selon l'une quelconque des revendications précédentes, dans lequel la pièce en forme de bouteille moulée intermédiaire secondaire est moulée par soufflage dans un moule secondaire tout en la chauffant à une température supérieure à la température maximale à laquelle le récipient en forme de bouteille sera soumis au cours de son utilisation.

3. Procédé selon l'une quelconque des revendications précédentes, dans lequel l'ébauche est orientée jusqu'à ce que la densité de cette ébauche atteigne au moins 1,36.

4. Procédé selon l'une quelconque des revendications précédentes, dans lequel, avant le moulage par soufflage, l'ébauche est chauffée à une température qui se rapproche de la température de cristallisation thermique de la résine de polyéthylène-téréphtalate, mais ne l'atteint pas.

5. Procédé selon l'une quelconque des revendications précédentes, dans lequel l'étape de moulage par soufflage avec orientation biaxiale d'une ébauche comprend le moulage par soufflage de l'ébauche dans un moule de soufflage primaire chauffé à une température de 110°C à 230°C pour former la pièce en forme de bouteille moulée intermédiaire primaire.

6. Procédé selon l'une quelconque des revendications précédentes, dans lequel l'ébauche est agrandie en surface par orientation 5 à 13 fois pour former la pièce en forme de bouteille moulée intermédiaire primaire.

7. Procédé selon l'une quelconque des revendications précédentes, dans lequel un grossissement entre la pièce en forme de bouteille moulée intermédiaire secondaire et le récipient en forme de bouteille est faible.

8. Procédé selon l'une quelconque des revendications précédentes, dans lequel on cristallise thermiquement une partie col de l'ébauche avant de façonner le récipient en forme de bouteille.

9. Procédé selon l'une quelconque des revendications précédentes, dans lequel le moulage par soufflage de la pièce en forme de bouteille moulée intermédiaire secondaire est effectué dans un moule de soufflage secondaire chauffé à une température de 100°C à 150°C.

10. Procédé selon l'une quelconque des revendications précédentes, dans lequel la partie moulée avec orientation de la pièce en forme de bouteille moulée intermédiaire secondaire est pratiquement de la même taille ou plus petite que la partie moulée avec orientation du récipient en forme de bouteille.

11. Procédé selon l'une quelconque des revendications précédentes, dans lequel ce moulage par soufflage avec orientation biaxiale crée une contrainte résiduelle interne, et cette pièce en forme de bouteille moulée intermédiaire primaire est déformée par la contrainte résiduelle interne pour éliminer pratiquement la contrainte résiduelle interne.

12. Procédé selon l'une quelconque des revendications précédentes, dans lequel un grossissement entre la pièce en forme de bouteille moulée intermédiaire secondaire et le récipient en forme de bouteille est faible par comparaison avec un grossissement entre l'ébauche et la pièce en forme de bouteille moulée intermédiaire primaire.
